(19) Europäisches Patentamt / European Patent Office / Office européen des brevets

(11) **EP 3 162 208 A1**

(12) **EUROPEAN PATENT APPLICATION**

(43) Date of publication:
**03.05.2017 Bulletin 2017/18**

(21) Application number: **15192167.3**

(22) Date of filing: **29.10.2015**

(51) Int Cl.:
*A01N 43/56* (2006.01)    *A01N 43/653* (2006.01)
*A01N 43/84* (2006.01)    *A01N 43/54* (2006.01)
*A01N 43/40* (2006.01)    *A01N 47/24* (2006.01)
*A01N 37/34* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Helm AG**
**20097 Hamburg (DE)**

(72) Inventors:
• **WEBER, Luiz**
**04718-001 São Paulo-SP (BR)**

• **KAISER, Jan Philipp**
**20251 Hamburg (DE)**
• **STRATMANN, Christian**
**21444 Vierhöfen (DE)**
• **HOPPE, Christoph**
**20144 Hamburg (DE)**

(74) Representative: **Uexküll & Stolberg**
**Partnerschaft von**
**Patent- und Rechtsanwälten mbB**
**Beselerstraße 4**
**22607 Hamburg (DE)**

(54) **FUNGICIDAL COMPOSITION FOR CONTROLLING FUNGAL INFECTIONS IN THE SOYBEAN PLANT**

(57)    Use of fenpropimorph or of compositions comprising fenproprimorph and at least one additional fungicide for the prevention and/or the treatment of phytopathogenic fungi in soybean plants.

EP 3 162 208 A1

**Description**

The present invention relates to methods of controlling fungicidal diseases of soybeans. More specifically, the invention relates to a method of controlling Soybean Rust and powdery mildew by the application of fenpropimorph or fungicidal mixtures of fenpropimorph to soybean plants.

**BACKGROUND**

Soybean Rust (herein referred as SR) can be caused by either two types of fungi *Phakopsora pachyrhizi* and *Phakopsora meibomiae* of which *P. meibomiae* is of minor importance. In 2001 SR appeared in South America and represents a serious economic problem as in untreated fields yield losses of up to 80 % can occur.

Currently the treatment with fungicides is the only way to manage SR. Among others, suitable fungicides for this treatment are strobilurins, triazoles, carboxamides and mixtures thereof.

Strobilurin class fungicides are protectant fungicides, which act by preventing fungi from spore germination or penetrating host tissue. Strobilurin fungicides are Qo inhibitors (QoI). They have single-site action and thus a monogenic mutation leads to fungicide resistance, therefore the risk for the development of resistance is high. Strobilurin fungicides form a depot of active ingredient in the wax layer of the plant with subsequent translaminar distribution.

Triazole class fungicides have curative action. Curative fungicides inhibit or stop the development of the infection. Triazole fungicides are demethylation inhibitors (DMI). They also have single-site action but a polygenic mutation of the fungus is needed in order to develop resistance, therefore the risk for the occurence of triazole resistant fungi is moderate. Triazole fungicides are systemic acting fungicides.

Contact fungicides have protectant action. Contact fungicides remain on the plant surface after their application and do ususally not penetrate into the plant tissue. Therefore they are sensitive to weather conditions and repeated application of the contact fungicide may become necessary if the fungicide is washed away e.g. by rain. Contact fungicides are non-systemic acting fungicides. They cover the surfaces of the plants and thus prevent the entry of harmful fungi. The class of contact fungicides comprises fungicides with different modes of action.

Fenpropimorph, which is a morpholine class fungicide, is primarily used in cereals, for control diseases such as powdery mildew (*Blumeri graminis f.sp tritici*), yellow rust (*Puccinia striiformis*), brown rust (*Puccinia recondita*) and leaf and glume blotch (*Septoria nodorum)* as well as in banana for control of sigatoka (*Mycosphaerella fijiensis).* Fenpropimorph has both a protectant effect and a weak curative effect, which is of minor importance. It is an inhibitor for the ergosterol biosynthesis and causes the formation of holes in the cell walls of the fungi which lead to rapid dehydration of the pathogens, having therefore a strong eradicative effect. Fenpropimorph has a two-site action and the risk for development of fungicidal resistance is low. Fenpropimorph is registered only for the application in cereals or fruits and vegetables and is only marketed for these uses.

The increased use of fungicides for the treatment of SR in soybean plants resulted in the development of resistant fungi, in particular of fungi which are resistant against active ingredients which had been used for a long time such as azoxystrobin. In order to overcome this problem new strobilurin fungicides with modified molecular structures such as trifloxystrobin were developed. However, since all known strobilurin fungicides only have single-site action in fungi the development of resistant strains is likely to occur and only a matter of time. Therefore there is a strong need for resistance management of SR in soybean plants.

It is known from WO 2007/048534 A1 that a combination of chlorothalonil with a strobilurin fungicide and a triazole fungicide can be used for controlling phytopathogenic fungi like *Phakopsora* species in plants or propagation material such as soybeans.

WO 2008/049575 A2 discloses a method for the treatment of SR in glyphosate resistant soybean plants, wherein the glyphosate resistant plant propagation material is treated with an effective amount of a fungicidal composition comprising at least one fungicide and treating the resulting plants with an effective amount of a herbicidal composition comprising glyphosate and optionally additional pesticides.

WO 2006/131230 A2 concerns a combination of a known herbicide selected from glyphosate, glyphosinate or gylophosinate-ammonium and a known fungicide for controlling phytophatogenic fungi, in particular soybean rust. These mixtures are preferably applied to trangenic plants which are resistant to the herbicides.

It is an object of the present invention to provide compositions for the prevention and/or the treatment of fungal infections of soybean plants, in particular of powdery mildew and more particularly for the treatment of Soybean Rust (SR).

It is a further object of the present invention to provide compositions for the prevention and/or the treatment of infections caused by fungi which are resistant to commonly used fungicides.

It is still a further object of the present invention to provide compositions for the prevention and/or treatment of fungal infections of soybean plants which can be applied to any soybean plant and which are not restricted to the use with genetically modified soybean plants.

It is another object of the present invention to provide compositions for the prevention and/or the treatment of fungal infections of soybean plants which are systemically active.

## SUMMARY

It was surprisingly found that fenpropimorph alone as well as in combination with another fungicide is effective in the treatment of fungicidal infections in soybean plants, in particular in the treatment of SR or powdery mildew, and provides a convenient method for resistance management.

The present invention relates to a composition which provides improved fungicidal properties especially for preventing and/or combating SR.

In a first aspect, the present invention provides a fungicidal composition for preventing and/or combating SR in soybean plants comprising fenpropimorph as the active ingredient.

In a second aspect the present invention provides a fungicididal composition for preventing and/or combating SR in soybean plants comprising fenpropimorph in combination with at least one additional active ingredient.

According to the second aspect of the present invention fenpropimorph is preferably combined with at least one additional fungicide selected from the following groups: DMI fungicides, QoI fungicides, contact fungicides, SDHI fungicides, and cyanoacetamide oxime fungicides.

If the composition comprises more than one additional active ingredient these additional active ingredients are preferably selected from different fungicide groups and have different modes of action.

In a third aspect the present invention provides stable agrochemical formulations comprising fenpropimorph, preferably in combination with at least one additional active ingredient for preventing and/or combating fungicidal infection of soybean plants, and optionally one or more formulation auxiliaries.

In a fourth aspect, the present invention provides a method of preventing and/or combating fungicidal infection of soybean plants. In particular the present invention provides a method of preventing and/or combating powdery mildew and more particularly SR in soybean plants, which comprises applying to the soybean plants a composition as herein defined.

## DETAILED DISCRIPTION

The present invention concerns fungicidal compositions which are effective in the treatment of fungicidal infections in soybean plants, in particular in the treatment of soybean rust (SR) cause by *Phakopsora pachyrhizi* or *Phakopsora meibomiae,* or powdery mildew cause by *Microsphaera diffusa* in soybean plants. The fungicidal compositions of the present invention may comprise fenpropimorph as the only active ingredient. Preferably the compositions of the present invention comprise fenpropimorph and at least one additional fungicide. The at least one additional fungicide is preferably selected from the group of DMI fungicides, QoI fungicides, contact fungicides, SDHI fungicides, and cyanoacetamide oxime.

The active ingredients herein are defined in accordance with the guidelines of the Fungicide Resistance Action Committee (FRAC), FRAC Code List© 2015 and FRAC LIST OF FUNGICIDE COMMON NAMES 2012. DMI fungicides are inhibitors of C14-demethylase of the sterol biosynthesis (**DeM**ethylation **I**nhibitors; FRAC Code 3, FRAC Code List© 2015). QoI fungicides are inhibitors of Qo site of complex III cytochrome bc1 (ubiquinol oxidase) (**Q**uinone **o**utside **I**nhibitors, FRAC Code 11, FRAC Code List© 2015). Contact fungicides are non-systemic fungicides with multi site action as defined in groups M1 to M11 of the FRAC Code List© 2015. SDHI fungicides are inhibitors of complex II in the mitochondrial respiration chain (**S**uccinate **d**eydrogenase **i**nhibitors; FRAC Code 7, FRAC Code List© 2015). Cyanoacetamide-oxime fungicides have an unknown mode of action (FRAC Code 27, FRAC Code List © 2015).

Preferred DMI Inhibitors are triazoles and triazolinthiones selected from FRAC Code List© 2015: azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole and prothioconazole. More preferred DMI fungicides are tebuconazole, cyproconazole, difenoconazole, epoxiconazole, metconazole, propiconazole, tetraconazole, triticonazole and prothioconazole.

Preferred QoI fungicides are selected from FRAC Code List© 2015: azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone and pyribencarb. More preferred QoI fungicides are strobilurin type fungicides which pare preferably selected from azoxystrobin, picoxystrobin, pyraclostrobin and trifloxystrobin.

Preferred contact fungicides are dithiocarbamates as defined in group M3, chloronitrils as defined in group M5 and inorganics as defined in group M1/2 of FRAC Code List© 2015.

Dithiocarbamate fungicides impact the metabolism in the fungi target cells by reacting and inactivating the sulfhydryl groups of amino acids and enzymes of fungal cell, what leads to disruption of lipid metabolism, respiration and production of adenosine triphosphate, therefore it has multi-site action and the risk for development of fungicidal resistance is low.

Chloronitril fungicide reacts with the thiol groups of glutathione, coenzyme A and several enzymes. Thus the fungal metabolism is interrupted or inhibited on several points resulting in the inhibition of the spore germination, therefore it has multi-site action and the risk for development of fungicidal resistance is low.

Inorganic fungicides which also can be linked to fatty acids or other organic molecules (nevertheless herein referred as inorganic fungicides), react with different chemical groups of cell proteins or membranes of fungi, which induces the denaturation of protein and enzyme systems, therefore they have multi-site action and the risk for development of fungicidal resistance is low.

Particularly preferred contact fungicides are copper and copper preparations, sulphur; feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat and fluoroimide. The most preferred contact fungicides are mancozeb, metiram, chlorothalonil, copper and copper preparations.

Preferred SDHI fungicides are selected from FRAC Code List© 2015: benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane and boscalid. More preferred SDHI fungicides are benzovindiflupyr and fluxapyroxad.

According to the invention preferably used fungicides with an unknown mode of action are cyanoacetamide-oxime fungicides. The most preferably used cyanoacetamide-oxime fungicide is cymoxanil.

Preferred fungicidal compositions according to the present invention comprising two active ingredients are compositions which comprise fenpropimorph and one of the preferred additional fungicides defined above.

More preferably the fungicidal compositions of the present invention comprise three active ingredients, i.e. fenpropimorph and two additional fungicides. The two additional fungicides are also selected from the preferred additional fungicides defined above.

Particularly preferred fungicidal compositions comprising two or three different active ingredients will be defined in the following. Of the compositions comprising two or more additional fungicides those compositions are most preferred wherein the two additional fungicides are selected from different classes of fungicides, i.e. have different modes of action.

A particularly preferred fungicidal composition according to the present invention comprising two active ingredients is a composition which comprises fenpropimorph and azaconazole. More preferably the composition additionally comprises a third active ingredient which is selected from bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and bitertanol. More preferably the composition additionally comprises a third active ingredient which is selected from azaconazole, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and bromuconazole. More preferably the composition additionally comprises a third active ingredient which is selected from azaconazole, bitertanol, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and cyproconazole. More preferably the composition additionally comprises a third active ingredient which is selected from azaconazole, bitertanol, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and difenoconazole. More preferably the composition additionally comprises a third active ingredient which is selected from azaconazole, bitertanol, bromuconazole, cyproconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and diniconazole. More preferably the composition additionally comprises a third active ingredient which is selected from azaconazole, bitertanol, bromuconazole, cyproconazole, difenoconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and epoxiconazole. More preferably the composition additionally comprises a third active ingredient which is selected from azaconazole, bitertanol, bromuconazole, cyproconazole, difenoconazole, diniconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and etaconazole. More preferably the composition additionally comprises a third active ingredient which is selected from azaconazole, bitertanol, bromuconazole, cyproconazole, difenoconazole, diniconazole, epoxiconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoximmethyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and fenbuconazole. More preferably the composition additionally comprises a third active ingredient which is selected from azaconazole, bitertanol, bromuconazole, cyproconazole, difenoconazole, diniconazole, epoxiconazole, etaconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoximmethyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and fluquinconazole. More preferably the composition additionally comprises a third active ingredient which is selected from azaconazole, bitertanol, bromuconazole, cyproconazole, difenoconazole, diniconazole, epoxiconazole, etaconazole, fenbuconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoximmethyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and flusilazole. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoximmethyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and flutriafol. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and hexaconazole. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and imibenconazole. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and ipconazole. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and metconazole. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and myclobutanil. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoximmethyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and penconazole. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoximmethyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and propiconazole. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoximmethyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and simeconazole. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoximmethyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and tebuconazole. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and tetraconazole. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and triadimefon. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and triadimenol. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and triticonazole. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metriam, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and prothioconazole. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoximmethyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and azoxystrobin. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, coumoxystrobin, enoxastrobin, flufenoxystrobin, picoxystrobin, pyraoxystrobin, mandestrobin, pyraclostrobin, pyrametostrobin, triclopyricarb, kresoximmethyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and coumoxystrobin. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, enoxastrobin, flufenoxystrobin, picoxystrobin, pyraoxystrobin, mandestrobin, pyraclostrobin, pyrametostrobin, triclopyricarb, kresoximmethyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and enoxystrobin. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, flufenoxystrobin, picoxystrobin, pyraoxystrobin, mandestrobin, pyraclostrobin, pyrametostrobin, triclopyricarb, kresoximmethyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and flufenoxystrobin. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, picoxystrobin, pyraoxystrobin, mandestrobin, pyraclostrobin, pyrametostrobin, triclopyricarb, kresoximmethyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and picoxystrobin. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, pyraoxystrobin, mandestrobin, pyraclostrobin, pyrametostrobin, triclopyricarb, kresoximmethyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and pyraoxystrobin. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, mandestrobin, pyraclostrobin, pyrametostrobin, triclopyricarb, kresoximmethyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and mandestrobin. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, pyraclostrobin, pyrametostrobin, triclopyricarb, kresoximmethyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and pyraclostrobin. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyrametostrobin, triclopyricarb, kresoximmethyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and pyrametostrobin. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, triclopyricarb, kresoximmethyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and triclopyricarb. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, kresoximmethyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and kresoxim-methyl. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and trifloxystrobin. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and dimoxystrobin. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and fenaminstrobin. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and metominostrobin. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and orysastrobin. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and femoxadone. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and fluoxastrobin. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and fenamidone. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and pyribencarb. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and copper and copper preparations. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and sulphur. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and feram. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and mancozeb. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and maneb. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and metiram. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and propineb. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and thiram. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and zineb. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and ziram. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and captan. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and captafol. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and folpet. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and chlorothalonil. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and dichlofluanid. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and tolyfluanid. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and guazatine. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and iminoctadine. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and anilazine. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and dithianon. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and chinomethionat. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and fluoroimide. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and benodanil. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and flutolanil. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and mepronil. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and isofetamid. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, fluopyram, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and fluopyram. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fenfuram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and fenfuram. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, carboxin, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and carboxin. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, oxycarboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and oxycarboxin. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, thifluzamide, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and thifluzamide. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, benzovindiflupyr, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and benzovindiflupyr. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, bixafen, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and bixafen. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, fluxapyroxad, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and fluxapyroxad. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, furametpyr, isopyrazam, penflufen, penthiopyrad, sedaxane, boscalid and cymoxanil.

Another particularly preferred fungicidal composition according to the present invention comprising two active ingredients is a composition which comprises fenpropimorph and furametpyr. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, isopyrazam, penflufen, penthiopyrad, sedaxane, boscalid and cymoxanil.

Another particularly preferred fungicidal composition according to the present invention comprising two active ingredients is a composition which comprises fenpropimorph and isopyrazam. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, penflufen, penthiopyrad, sedaxane, boscalid and cymoxanil.

Another particularly preferred fungicidal composition according to the present invention comprising two active ingredients is a composition which comprises fenpropimorph and penflufen. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penthiopyrad, sedaxane, boscalid and cymoxanil.

Another particularly preferred fungicidal composition according to the present invention comprising two active ingredients is a composition which comprises fenpropimorph and penthiopyrad. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, sedaxane, boscalid and cymoxanil.

Another particularly preferred fungicidal composition according to the present invention comprising two active ingredients is a composition which comprises fenpropimorph and sedaxane. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, boscalid and cymoxanil.

Another particularly preferred fungicidal composition according to the present invention comprising two active ingredients is a composition which comprises fenpropimorph and boscalid. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane and cymoxanil.

Another particularly preferred fungicidal composition according to the present invention comprising two active ingredients is a composition which comprises fenpropimorph and cymoxanil. More preferably the composition additionally comprises a third active ingredient which is selected from azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, metconazole, myclobutanil, penconazole, propiconazole, simeconazole, tebuconazole, tetraconazole, triadimefon, triadimenol, triticonazole, prothioconazole, azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, copper and copper preparations, sulphur, feram, mancozeb, maneb, metiram, propineb, thiram, zineb, ziram, captan, captafol, folpet, chlorothalonil, dichlofluanid, tolyfluanid, guazatine, iminoctadine, anilazine, dithianon, chinomethionat, fluoroimide, benodanil, flutolanil, mepronil, isofetamid, fluopyram, fenfuram, carboxin, oxycarboxin, thifluzamide, benzovindiflupyr, bixafen, fluxapyroxad, furametpyr, isopyrazam, penflufen, penthiopyrad, sedaxane and boscalid.

Compositions which in addition to fenpropimorph comprise three or more additional fungicides are a further aspect of the present invention. The three or more additional fungicides are preferably selected from the preferred fungicides defined above, and more preferably the three or more additional active ingredients are selected from different groups of compounds, i.e. have different modes of action.

Of the compositions defined above the following compositons are exceptionally preferred:

Compositions comprising fenpropimorph and a QoI fungicide selected from azoxystrobin, picoxystrobin, pyraclostrobin, trifloxystrobin. Particularly preferred are compositions additionally comprising a DMI fungicide or SDHI fungicide as defined in the following.

Compositions comprising fenpropimorph and a DMI fungicide selected from cyproconazole, difenoconazole, epoxiconazole, metconazole, propiconazole, tebuconazole, tetraconazole, triticonazole, prothioconazole.

Compositions comprising fenpropimorph and a SDHI fungicide selected from benzovindiflupyr, fluxapyroxad.

Compositions comprising fenpropimorph and a contact fungicide selected from mancozeb, metiram, chlorothalonil.

Compositions comprising fenpropimorph and the cyanoacetamide-oxime fungicide cymoxanil.

According to the invention most preferred compositions for preventing and/or combating SR comprising two active ingredients are compositions comprising fenpropimorph and a contact fungicide, more specifically fenpropimorph and chlorothalonil; fenpropimorph and mancozeb; fenpropimorph and metiram, or fenpropimorph and a QoI fungicide.

Compositions which comprise fenpropimorph and a contact fungicide preferably comprise the active ingredients in a ratio by weight of fenpropimorph to contact fungicide(s) within the range of 1 : 1 - 30, more preferred 1 : 1.5 - 15 and most preferred 1 : 2 - 10.

Particularly preferred compositions comprising three active ingredients are compositions comprising fenpropimorph, a QoI fungicide and a DMI fungicide, and compositions comprising fenpropimorph, a QoI fungicide and a SDHI fungicide, more particularly:

- fenpropimorph,
- a QoI fungicide selected from the group consisting of azoxystrobin, picoxystrobin, trifloxystrobin, and pyraclostrobin; and
- a DMI fungicide selected from the group consisting of cyproconazole, tebuconazole, prothioconazole, and epoxiconazole; or
- fenpropimorph,
- a QoI fungicide selected from the group consisting of azoxystrobin, picoxystrobin, trifloxystrobin, and pyraclostrobin; and
- a SDHI fungicide selected from the group consisting of fluxapyroxad and benzovindiflupyr.

The most preferred compositions comprising fenpropimorph, a QoI fungicide and a DMI fungicide are fenpropimorph, cyproconazole and azoxystrobin; fenpropimorph, tebuconazole and azoxystrobin; fenpropimorph, tebuconazole and picoxystrobin; fenpropimorph, prothioconazole and trifloxystrobin; fenpropimorph, epoxiconazole and pyraclostrobin.

The most preferred compositions comprising fenpropimorph, a QoI fungicide and a SDHI fungicide are fenpropimorph, fluxapyroxad and pyraclostrobin; fenpropimorph, benzovindiflupyr and azoxystrobin.

Compositions which comprise fenpropimorph, DMI fungicide and QoI fungicide preferably comprise the active ingredients in a ratio by weight of fenpropimorph to DMI fungicide(s) to QoI fungicide(s) within the range of 1 : 0.01 - 5 : 0.01 - 4, more preferrably 1 : 0.05 - 2.5 : 0.1 - 2, and most preferrably 1 : 0.1 - 1.5 : 0.2 - 1.2.

Compositions which comprise fenpropimorph, SDHI fungicide and QoI fungicide preferably comprise the active ingredient in a ratio by weight of fenpropimorph to SDHI fungicide(s) to QoI fungicide(s) within the range of 1 : 0.1 - 4 : 0.1 - 7, more preferrably 1 : 0.4 - 2 : 1 - 4 and most preferrably 1 : 0.6 - 1.3 : 1.3-2.5.

All compositions are preferably applied to the plants in a rate of 50 to 250 g fenpropimorph/ha, more preferrably 100 to 220 g fenpropimorph/ha and most preferrably 150 g/ha to 200 g fenpropimorph /ha. The amount of the one or more additional fungicides can be calculated from the above ratios.

It was surprisingly found that fenpropimorph in combination with at least one of the herein mentioned active ingredients leads to an unexpected improved action against fungicidal infections in soybean plants. In particular, fenpropimorph in combination with at least one of the preferred additional active ingredients as defined above leads to an unexpected high activity in the prevention and/or treatment of SR.

The activity in the prevention and/or treatment of SR achieved with the compositions according to the invention is greater than the activity which would have been expected. The composition according to the present invention surprisingly show synergism, which means that the resulting effect is greater than the sum of the effects of the individual compounds.

Furthermore it was found that the compositions of the present invention are also effective in the treatment of powdery mildew (*Microsphaera diffusa*) in soybeans, which is particularly advantageous as SR and powdery mildew often occur together and can now be treated with a single composition, which significantly reduces the costs and effort which are associated with the treatment of soybean plants. The compositions according to the invention strengthen the plant health and improve the yield of the treated soybean plants compared to plants which were treated with common fungicides.

A composition according to the invention may have the form of an agrochemical formulation selected from but not limited to granules, pellets, microcapsules, powders, suspension concentrates, suspension emulsion, and oil dispersion. The compositions are preferably in form of a liquid formulation suitable for agrochemical use, such as an emulsion, a suspension concentrate, a suspension emulsion, or an oil dispersion. Most preferably the agrochemical formulation according to the invention is in the form of a suspension emulsion.

In addition to the one or more active ingredients the compositions of the present invention preferably comprise one or more auxiliaries. The auxiliaries in the composition will depend on the type of the formulation. Suitable auxiliaries include but are not limited to surfactants, emulsifier, adjuvants, structuring agents, organic solvents, inorganic solvents, stabilizers, antifoam agents, antifreeze agents, carrier materials, bactericides, preservatives, antioxidants, coloring agents, thickeners, dispersants and inert fillers.

The one or more emulsifiers are preferably selected from non-ionic and/or anionic emulsifiers, such as isotridecyl ethoxylate, castor oil ethoxylate, arylethylphenylpropylglycol ether, optionally in solution with phosphate and/or potassium salt, fatty alcohol polyglycol ether, polyoxyethylene castor oil, calcium alkylethylene sulphonate, n-C$_{12}$ alkyl benzene sulfonate calcium salt in organic solvent, polyethylene glycol ether based on natural cetyl stearyl fatty alcohol.

The one ore more wetting agents and/or dispersing agents are preferably selected from non-ionic and/or anionic wetting agents and/or dispersing agents, such as alkali metal salts of cresol formaldehyde polymers, alkali metal salts of EO/PO-block polymers-phosphoric acid ester, alkyl esters of vegetable oils.

The one or more organic solvents are preferably selected from aromatic fluids having heavy aromatic grades (e.g. Solvesso™), cyclohexanone, dimethyl amide of fatty acid, benzyl alcohol.

The agrochemical formulation according to the invention may optionally comprise further customary agrochemical auxiliaries, for instance rheology modifiers such as xantham gum and/or silicates, antifoam agents such as polymers of fatty alcohol polyglycol ethers, silicone based polymers, bactericides such as 1,2-benzisothiazole-3-one, and/or antifreezing agents such as glycerol.

The compositions of the present invention may be provided in the form of a single formulation comprising all components. The may also be provided in the form of two or more separate formulations which can either be combined prior to the application to the plants (tank mix) or which can be applied separately to the plants, either simultaneously or at different times. For instance, compositions of the prensent invention comprising two or more actice ingredients can be provided in the form of two or more separate formulations each comprising only one active ingredient.

The present invention also concerns a method for treatment and/or prevention of fungicidal infection in soybean plants, in particular SR and/or powdery mildew, by applying a fungicidal mixture according to this invention in the vegetative or reproductive growth stage of the soybean plant to the soybean plants and/or the area soybean plants are grown.

**EXAMPLES:**

**Example 1: Field trials**

Field trials with the compositions according to the invention were conducted. The field trials were conducted on different plots of the same field in which plots were selected for an untreated control as well as for comparison standard. Soybean plants were grown in all plots. Four repetitions for each combination of the active ingredients were conducted. From the field trials AUDPC was obtained, which is the area under the disease progress curve, and a quantitative summary of disease intensity over time as well as the percentage of SR control and the productivity in kg/ha soybeans. The field trials were conducted in different growing seasons with varying pest pressure of SR, therefore the results for the yield (kg/ha) cannot be compared between different field trial seasons, but only with the results for yield (kg/ha) achieved compared to the untreated control or the comparison standard.

In a first aspect the effective amount of fenpropimorph for the treatment of SR in soybean plants was determined. Therefore the soybean plants were treated with different dosage rates of fenpropimorph (FEN) while the dosage rates of azoxystrobin and tebuconazole were kept constant with azoxystrobin (AZ) 60 g/ha and tebuconazole (TCZ) 120 g/ha. The dosage rates of the active ingredient fenpropimorph used in the tests are set forth in the table 1 as g (gram) active ingredient (a.i.)/ha. As comparison standard the mixture of trifloxystrobin (TRS) and prothioconazole (PCZ) (FOX® ex BAYER™) was used which are both fungicides, trifloxystrobin as a strobilurin class fungicide and prothioconazole as a triazole class fungicide.

**Table 1** Results of the field trials on the treatment of SR with azoxystrobin (AZ) and tebuconazole (TCZ) and fenpropimorph (FEN)

| Treatment | Dosage rate (g/ha) AZ/TCZ | Dosage rate (g/ha) FEN | AUDPC | %SR control | productivity yield (kg/ha) |
|---|---|---|---|---|---|
| control | 0 | 0 | 1537.9 | 0 | 564.0 |
| 1 | 60+120 | 0 | 1283.1 | 16.6 | 759.7 |
| 2 | 60+120 | 50 | 802.1 | 47.8 | 1155.7 |
| 3 | 60+120 | 75 | 768.4 | 50.0 | 1046.1 |
| 4 | 60+120 | 100 | 738.6 | 52.0 | 1125.1 |
| 5 | 60+120 | 125 | 681.2 | 55.7 | 1331.5 |
| 6 | 60+120 | 150 | 645.8 | 58.0 | 1270.6 |
| 7 | 60+120 | 188 | 593.5 | 61.4 | 1299.3 |
| 8 (TRS/PCZ) | 60+70 | 0 | 469.1 | 69.5 | 1494.0 |

The results of the field trials for determining the effective dosage rates of fenpropimorph showed that a significant increase in SR control from 16.6% to 47.8% was already achieved by using amounts of 50g/ha of fenpropimorph in combination with azoxystrobin and tebuconazole. This SR control was further increased up to 55.7% by using 125g/ha of fenpropimorph and up to 61.4% by using 188 g/ha of fenpropimorph while the dosage range of azoxystrobin and tebuconazole was kept constant. Therefore field trials for dosage ranges of fenpropimorph of 125g/ha, 188g/ha and 250g/ha were conducted in combination with azoxystrobin and cyproconazole. Therefore the soybean plants were treated with different ratios of fenpropimorph (FEN) and different dosage rates of azoxystrobin (AZ) and cyproconazole (CCZ) The dosage rates of the active ingredient fenpropimorph used in the tests are set forth in the table 2 as g (gram) active ingredient (a.i.)/ha. As comparison standard the mixture of trifloxystrobin (TRS) and prothioconazole (PCZ) (FOX® ex BAYER™) was used.

**Table 2** Results of the field trials on the treatment of SR with azoxystrobin (AZ) and cyproconazole (CCZ) and fenpropimorph (FEN)

| Treatment | Dosage rate (g/ha) AZ/CCZ | Dosage rate (g/ha) FEN | AUDPC | % SR control | productivity yield (kg/ha) |
|---|---|---|---|---|---|
| control | 0 | 0 | 1509.2 | 0 | 527.3 |
| 1 | 60+24 | 0 | 1095.2 | 20.4 | 796.9 |
| 2 | 30+12 | 125 | 826.9 | 45.2 | 1234.3 |
| 3 | 45+18 | 188 | 765.6 | 49.3 | 1594.1 |
| 4 | 60+24 | 250 | 554.7 | 63.2 | 1497.5 |
| 5 (TRS/PCZ) | 60+70 | 0 | 347.7 | 77.0 | 1523.6 |

The field trials used fenpropimorph in an amount of 125g/ha, 188g/ha and 250g/ha in combination with azoxystrobin and cyproconazole showed a significant increase in SR control compared to the SR control achieved by using the combination of azoxystrobin and cyproconazole without fenpropimorph. The SR control was increased from 20.4% to 45.2% by using 125g/ha of fenpropimorph although the amount of azoxystrobin and cyproconazole was lowered by half in the combination with fenpropimorph compared to the treatment with azoxytrobin and cyproconazole without fenpropimorph added. The SR control was increased from 20.4 % up to 63.2 % by using 250g/ha of fenpropimorph in combination with azoxystrobin 60g/ha and cyproconazole 24g/ha compared to the treatment of the soybean plants with the same amount of azoxystrobin and cyproconazole without fenpropimorph added.

The plots treated with the mixtures of azoxystrobin and tebuconazole, or azoxystrobin and cyproconazole, in combination with fenpropimorph according to the invention showed a significantly lower SR infection of the soybean plants when compared to the plots treated with mixtures of azoxystrobin and tebuconazole, or azoxystrobin and cyproconazole. The infection of the soybean plants with SR after the treatment with compositions according to the invention comprising fenpropimorph was comparable with the observed infection in the plots of soybean plants treated with trifloxystrobin and prothioconazole (FOX®). This composition of trifloxystrobin and prothioconazole was introduced into the Brazilian market in 2011 by Bayer™ and therefore it is new in the treatment of SR resulting in barely fungicidal resistance against these new active ingredients. It is expected that fungicidal resistance will show up in future also for this mixture, as for all of the strobilurin class fungicides and also for the triazole class fungicides.

In a second aspect field trials were conducted in which the effect of fenpropimorph in combination with at least one further active ingredient was determined. Therefore field trials were conducted by treating soybean plants with at least one active ingredient different from fenpropimorph, the comparison standard. In addition to that, soybean plants were treated with this comparison standard in combination with fenpropimorph. The active ingredients as well as their dosage rates and the dosage rates of fenpropimorph used in the tests are set forth in the table 3 as g (gram) active ingredient (a.i.)/ha. The dosage rate of fenpropimorph was kept constant at 150g/ha and the effectiveness was taken from the average of two repetitions of these field trials. The field trials were conducted on different plots of the same field in which plots were selected for an untreated control as well as for comparison standards. The comparison standard comprised the active ingredients without using fenpropimorph to determine the efficacy of these combination compared to the same combinations which comprised additionally fenpropimorph. On all plots grew soybean plants.

**Table 3** Results of the field trials on the treatment of SR for fenpropimorph in combinaiton with different active ingredients

| Treatment | Dosage ratesof active ingredients | relative effectiveness % | Yield (kg/ha) |
|---|---|---|---|
| untreated control | --- | --- | 2171.5 |
| azoxystrobin + tebuconazole | 60 120 | 30.2 | 2371.0 |
| azoxystrobin + tebuconazole + fenpropimorph | 60 120 150 | 59.2 | 2933.0 |
| azoxystrobin + cyproconazole | 60 24 | 46.4 | 2323.6 |
| azoxystrobin + cyproconazole + fenpropimorph | 60 24 150 | 59.5 | 3092.0 |
| trifloxystrobin + prothiocoanzole | 60 70 | 75.2 | 3159.3 |
| trifloxystrobin + prothioconazole + fenpropimorph | 60 70 150 | 77.7 | 3190.0 |
| picoxystrobin + tebuconazole | 60 100 | 60.0 | 3021.3 |
| picoxystrobin + tebuconazole + fenpropimorph | 60 100 150 | 66.2 | 3166.8 |
| pyraclostrobin + epoxiconazole | 66.5 25 | 19.1 | 2225.6 |
| pyraclostrobin + epoxiconazole + fenpropimorph | 66.5 25 150 | 37.5 | 2546.0 |
| pyraclostrobin + fluxapyroxad | 100 50 | 57.3 | 2889.5 |
| pyraclostrobin + fluxapyroxad + | 100 50 | 67.1 | 3187.0 |

(continued)

| Treatment | Dosage ratesof active ingredients | relative effectiveness % | Yield (kg/ha) |
|---|---|---|---|
| fenpropimorph | 150 | | |
| azoxystrobin + benzovindiflupyr | 60 30 | 78.3 | 3309.1 |
| azoxystrobin + benzovindiflupyr + fenpropimorph | 60 30 150 | 82.0 | 3385.2 |

**Example 4: In vitro tests**

For conducting the in vitro tests soybean plants were grown in plastic cups containing commercial substrate, in a growth room with controlled temperature, humidity and light/darkness period. The plants were grown in this environment in order to be free of inoculum until preventive testing and curative testing took place. Trifoliate leaves in the same position in the plant were removed and placed in transparent plastic boxes and water was added to promote rooting of the leaves and to keep them alive in the evaluation period.

For the preventive testing application of fungicides was performed with pressurized backpack sprayer with $CO_2$, considering spray volume for simulating normal field trial. After application, the boxes were kept open until the drying of the leaves. The treated leaves were incubated at a temperature of 23 °C $\pm$ 2°C and 12/12 hour light/darkness period for 4 days. After this incubation period the inoculation was performed with a suspension comprising SR spores (40.000 SR spores per 1 mL of water). Again the leaves were incubated in the dark at 23 °C $\pm$ 2°C for 12 hours for germination and penetration of the spores followed by a 12 hour photoperiod. 4 days after inoculation the leaves were observed daily until the first appearance of symptoms of SR infection. From the date on the first symptoms were observed the evaluation of the disease severity was made at 7, 14 and 21 days.

For the curative testing the inoculation with a suspension comprising SR spores (40.000 SR spores per 1 mL of water) was performed on the fungicide untreated leaves. The leaves were incubated in the dark at 23 °C $\pm$ 2°C for 12 hours for germination and penetration of the spores followed by a 12 hour photoperiod. After the incubation for 24 hours in total the application of fungicides was performed in the same way as for the preventive testing. 4 days after inoculation the leaves were observed daily until the first appearance of symptoms of SR infection. From that date on the evaluation of the disease severity was made at 7, 14 and 21 days.

The evaluation was based on disease severity, based on a known scale (GODOY, C. V.; KOGA, L. J.; CANTERI, M. G. Diagrammatic scale for assessment of soybean rust severity. Fitopatol. Bras., (31)1, 2006, 63-68).

After evaluation of severity, it was calculated AUDPC and the relative efficacy of all fungicide treatments, according to Abbott (Abbott, W. S., A method of computing the effectiveness of an insecticides, Journal of Economic Entomology, 18, 1925. 265-267).

Relative efficacy:

$$\%E = (1 - \frac{Tn}{UTC}) * 100$$

wherein

%E is relative efficacy compared to untreated check, in percentage;
Tn is average disease severity in fungicide treatment,
UTC is average disease severity in untreated check.

After the calculation of relative efficacy it was proceeded the application of Colby synergism calculation formula (Colby, S.R., Calculating synergistic and antagonistic responses of herbicide combinations, Weeds, 15, 1967, 20-22.). The formula proposed by Colby is as follows:

$$\%Cexp = 100 - \frac{(100 - A) * (100 - B)}{100}$$

wherein

$\%C_{exp}$ is the efficacy expected for the combination of the active ingredients;
A is the relative efficacy of compound A;
B is the relative efficacy of compound B

The expected efficacy was compared to the observed efficacy and the result was calculated by:

$$R = \frac{\%Cobs}{\%Cexp}$$

wherein

R is synergism ratio;
$\%C_{obs}$ is the relative efficacy of control provided by the combination, as observed in the experiment;
$\%C_{exp}$ is the expected relative efficacy of control provided by the combination, as calculated from relative efficacy of not combined compounds.

If R is greater than, equal to, or less than 1, than the interaction between the active ingredients is synergistic, expected, or antagonistic.
In vitro tests were conducted to determine the preventive and curative effect of fenpropimorph in combination with at least one additional active ingredient, using the above decribed methods for conducting preventive and curative testing. To obtain the results for the fungicidal action of the active ingredients expected, trials were conducted in which trifoliate leaves were treated only with fenpropimorph as active ingredient in dosage rates of 50g/ha, 100g/ha or 200g/ha and in which trifoliate leaves were treated with at least one active ingredient different from fenpropimorph in different dosage rates. Additionally in vitro tests were conducted in which trifoliate leaves were treated with a combination of fenpropimorph and at least one additional active ingredient. The results of these in vitro tests are set forth in the table 4 and table 5.
Surprisingly the results obtained by the in vitro tests showed a synergistic effect for the combination of fenpropimorph with at least one active ingredient by the ratio of $R(C_{obs}/C_{exp})$ which is larger 1. In the vitro tests the application rates of the active ingredients different from fenpropimorph were similar to the application rates used in field applications, i.e. these compounds were used in a concentration which ensured maximal efficacy. Therefore, the effect of the addition of fenpropimorph to these fungicides can only be small if the activity of the compositions without fenpropimorph is high. Nevertheless synergism was found in all instances.

Table 4 Results of in vitro tests for curative testing (FEN = fenpropimorph, AZ = azoxystrobin, CCZ = cyproconazole, CLT= chlorothalonil)

| Curative testing | | 7 days | 14 days | 21 days | AUDPC |
|---|---|---|---|---|---|
| FEN(50 g/ha) + AZ (60 g/ha) + CCZ (24 g/ha) | %Cexp | 86.2 | 88.4 | 86.8 | 87.6 |
| | %Cobs | 90.3 | 89.6 | 90.3 | 90.0 |
| | R(Cobs/Cexp) | 1.047 | 1.014 | 1.041 | 1.027 |
| FEN(200 g/ha) + AZ (60 g/ha) + CCZ (24 g/ha) | %Cexp | 96.7 | 97.5 | 96.9 | 97.2 |
| | %Cobs | 98.4 | 97.6 | 97.3 | 97.6 |
| | R(Cobs/Cexp) | 1.017 | 1.002 | 1.004 | 1.005 |
| FEN(50 g/ha) + CLT (1080 g/ha) | %Cexp | 78.3 | 65.5 | 57.6 | 66.1 |
| | %Cobs | 88.3 | 83.0 | 74.6 | 81.7 |
| | R(Cobs/Cexp) | 1.129 | 1.267 | 1.296 | 1.236 |
| FEN(100 g/ha) + CLT (1080 g/ha) | %Cexp | 82.4 | 71.6 | 63.8 | 71.9 |
| | %Cobs | 90.4 | 89.8 | 86.0 | 88.9 |
| | R(Cobs/Cexp) | 1.097 | 1.254 | 1.347 | 1.236 |

**Table 5** Results of in vitro tests for preventive testing (FEN = fenpropimorph, CLT= chlorothalonil).

| Preventive testing | | 7 days | 14 days | 21 days | AUDPC |
|---|---|---|---|---|---|
| FEN(50 g/ha) + CLT (1080 g/ha) | %Cexp | 82.0 | 74.8 | 73.2 | 74.9 |
| | %Cobs | 95.6 | 83.1 | 79.4 | 82.3 |
| | **R(Cobs/Cexp)** | **1.166** | **1.110** | **1.085** | **1.099** |
| FEN(100 g/ha) + CLT (1080 g/ha) | %Cexp | 86.9 | 83.6 | 84.7 | 83.8 |
| | %Cobs | 95.6 | 92.7 | 91.8 | 92.9 |
| | **R(Cobs/Cexp)** | **1.099** | **1.109** | **1.083** | **1.108** |
| FEN(200 g/ha) + CLT (1080 g/ha) | %Cexp | 98.3 | 94.8 | 94.4 | 95.4 |
| | %Cobs | 96.7 | 96.5 | 96.8 | 96.6 |
| | **R(Cobs/Cexp)** | **0.984** | **1.018** | **1.025** | **1.013** |

## Claims

1. Use of fenpropimorph for the prevention and/or the treatment of phytopatogenic fungi in soybean plants.

2. Use according to claim 1 for the prevention and/or treatment of Soybean Rust (*Phakopsora pachyrhizi* and *Phakopsora meibomiae)* and/or powdery mildew (*Microsphaera diffusa*).

3. Use according to claim 1 or 2, wherein fenpropimorph is used in combination with a DMI fungicide, Qol fungicide, contact fungicide, SDHI fungicide and/or cyanoacetamide oxime fungicide

4. Use according to claim 3, wherein fenpropimorph is used in combination with one or more DMI fungicides which are selected from tebuconazole, cyproconazole, difenoconazole, epoxiconazole, metconazole, propiconazole, tetraconazole, triticonazole, prothioconazole.

5. Use according to claim 3 or 4, wherein fenproprimorph is used in combination with one or more Qol fungicides which are selected from azoxystrobin, picoxystrobin, pyraclostrobin, trifloxystrobin.

6. Use according to any one of claims 3 to 5, wherein fenproprimorph is used in combination with one or more contact fungicides, which are selected from mancozeb, metiram, chlorothalonil, copper and copper preparations..

7. Use according to any one of claims 3 to 6, wherein fenproprimorph is used in combination with one or more SDHI fungicides, which are selected from benzovindiflupyr and fluxapyroxad.

8. Use according to any one of claims 3 to 7, wherein fenproprimorph is used in combination with the cyanoacetamide-oxime fungicide cymoxanil.

9. Fungicidal composition for the pevention and/or treatment of Soybean Rust and/or powdery mildew comprising fenpropimorph and a contact fungicide; or fenpropimorph, a Qol fungicide and a DMI fungicide; or fenpropimorph, a Qol fungicide and a SDHI fungicide; and otionally one or more auxiliary materials selected from surfactants, emulsifier, adjuvants, structuring agents, organic solvents, inorganic solvents, stabilizers, antifoam agents, antifreeze agents, carrier materials, bactericides, preservatives, antioxidants, coloring agents, thickeners, dispersants and inert fillers.

10. Fungicidal composition according to claim 9, comprising fenpropimorph and a contact fungicide wich is selected from the group consisting of chlorothalonil, mancozeb, and metiram.

11. Funcicidal composition accroding to claim 9 or 10, comprising the active ingredients in a ratio by weight of fenpropimorph to contact fungicide within the range of 1 : 1-30, more preferred 1 : 1.5-15 and most preferred 1 : 2-10.

**12.** Funcicidal composition accroding to claim 9, comprising

fenpropimorph, a Qol fungicide selected from the group consisting of azoxystrobin, picoxystrobin, trifloxystrobin, and pyraclostrobin; and a DMI fungicide selected from the group consisting of cyproconazole, tebuconazole, prothioconazole, and epoxiconazole; or

fenpropimorph, a Qol fungicide selected from the group consisting of azoxystrobin, picoxystrobin, trifloxystrobin, and pyraclostrobin; and a SDHI fungicide selected from the group consisting of fluxapyroxad and benzovindiflupyr.

**13.** Fungicidal composition according to claim 12, comprising fenpropimorph, cyproconazole and azoxystrobin; or fenpropimorph, tebuconazole and azoxystrobin; or fenpropimorph, tebuconazole and picoxystrobin; or fenpropimorph, prothioconazole and trifloxystrobin; or fenpropimorph, epoxiconazole and pyraclostrobin; or fenpropimorph, fluxapyroxad and pyraclostrobin; or fenpropimorph, benzovindiflupyr and azoxystrobin as active ingredients.

**14.** Fungicidal composition according to any one of claims 9 or 12 to 13, comprising the active ingredients in a ratio by weight of fenpropimorph to DMI fungicide(s) to Qol fungicide(s) within the range of 1 : 0.01-5 : 0.01-4, more preferrably 1 : 0.05-2.5 : 0.1-2, and most preferrably 1 : 0.1-1.5 : 0.2-1.2; or in a ratio by weight of fenpropimorph to SDHI fungicide(s) to Qol fungicide(s) within the range of 1 : 0.1-4 : 0.1-7, more preferrably 1 : 0.4-2 : 1-4 and most preferrably 1 : 0.61-1.3 : 1.3-2.5.

**15.** A method for the treatment and/or the prevention of fungicidal infection in soybean plants, in particular SR and/or powdery mildew, by applying a fungicidal composition according to any one of claims 9 to 15 to the plants and/or the area soybean plants are grown.

Europäisches
Patentamt

European
Patent Office

Office européen
des brevets

# EUROPEAN SEARCH REPORT

Application Number

EP 15 19 2167

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | WO 2012/019981 A1 (BASF SE [DE]; DIETZ JOCHEN [DE]; HADEN EGON [DE]; STRATHMANN SIEGFRIED) 16 February 2012 (2012-02-16)<br>* page 9, lines 23-30 *<br>* page 19, lines 20-31 *<br>* claim 8 *<br>* claim 13 *<br>* page 61; examples; table M4 *<br>* page 66; examples; table M7 *<br>----- | 1-3,9-11<br><br><br>1-9,<br>12-15 | INV.<br>A01N43/56<br>A01N43/653<br>A01N43/84<br>A01N43/54<br>A01N43/40<br>A01N47/24<br>A01N37/34 |
| X | "Mantra(R)",<br>Product Label,<br>27 August 2014 (2014-08-27), pages 1-19,<br>XP055233871,<br>Retrieved from the Internet:<br>URL:http://www.agricentre.basf.co.uk/agrop ortal/uk/media/product_files_uk/labels/Man tra.pdf<br>[retrieved on 2015-12-04]<br>* the whole document *<br>----- | 9,12-14 | |
| X | "Diamant(R)",<br>Product Label,<br>24 October 2014 (2014-10-24), pages 1-19,<br>XP055233873,<br>Retrieved from the Internet:<br>URL:http://www.agricentre.basf.ie/agroport al/ie/media/product_files_ie/labels_1/Diam ant_IE.pdf<br>[retrieved on 2015-12-04]<br>* the whole document *<br>-----<br><br>-/-- | 9,12-14 | TECHNICAL FIELDS SEARCHED (IPC)<br><br>A01N |

The present search report has been drawn up for all claims

| Place of search | Date of completion of the search | Examiner |
|---|---|---|
| Munich | 19 April 2016 | Galley, Carl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

Application Number

EP 15 19 2167

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/110583 A2 (BASF SE [DE]; DIETZ JOCHEN [DE]; RENNER JENS [DE]; VRETTOU-SCHULTES MA) 15 September 2011 (2011-09-15) | 1-3 | |
| Y | * page 31; compounds I-11 * <br> * page 105, paragraph first * <br> * claims * | 1-8,15 | |
| Y | WO 2011/095134 A1 (ROTAM AGROCHEM INT CO LTD [CN]; BRISTOW JAMES TIMOTHY [CN]) 11 August 2011 (2011-08-11) * examples * * claims * | 1-8,15 | |
| Y | JUNIA VIANNA CORRÃ A DA SILVA ET AL: "Soybean cultivar performance in the presence of soybean Asian rust, in relation to chemical control programs", EUROPEAN JOURNAL OF PLANT PATHOLOGY, KLUWER ACADEMIC PUBLISHERS, DO, vol. 131, no. 3, 7 June 2011 (2011-06-07), pages 409-418, XP019959000, ISSN: 1573-8469, DOI: 10.1007/S10658-011-9818-Y * pages 411-412, paragraph bridging * | 1-9, 12-15 | |
| Y | CN 101 911 940 A (YUANLIN WU) 15 December 2010 (2010-12-15) * examples 1-4 * | 1-3,5-8, 15 | |
| Y | WO 2015/079334 A1 (UPL LTD [IN]) 4 June 2015 (2015-06-04) * claims * * pages 24-25; table * | 1-3,5-8, 15 | |

TECHNICAL FIELDS SEARCHED (IPC)

-/--

The present search report has been drawn up for all claims

| Place of search | Date of completion of the search | Examiner |
|---|---|---|
| Munich | 19 April 2016 | Galley, Carl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 15 19 2167

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | GUICHERIT E ET AL: "Solatenol - the second generation benzonorbornene SDHI carboxamide with outstanding performance against key crop diseases", MODERN FUNGICIDES AND ANTIFUNGAL COMPOUNDS VII : PROCEEDINGS OF THE 17TH INTERNATIONAL REINHARDSBRUNN SYMPOSIUM, APRIL 21-25, 2013, FRIEDRICHRODA, GERMANY, DEUTSCHE PHYTOMEDIZINISCHE GESELLSCHAFT, DE, 1 January 2014 (2014-01-01), pages 67-72, XP009189313, ISBN: 978-3-941261-13-6 * Conclusions; page 72 * * figure 7 * | 1-3,5-9, 12-15 | |
| Y | XIAO-HE YANG ET AL: "Integrated Control of Soybean Phytophthora Root Rot", DADOU KEXUE - SOYBEAN SCIENCE., vol. 4, no. 33, 25 August 2014 (2014-08-25), pages 554-558, XP055263196, CN ISSN: 1000-9841 * tables 1,4 * | 1-3,5-8 | |

TECHNICAL FIELDS
SEARCHED (IPC)

The present search report has been drawn up for all claims

| Place of search | Date of completion of the search | Examiner |
|---|---|---|
| Munich | 19 April 2016 | Galley, Carl |

EPO FORM 1503 03.82 (P04C01)

Europäisches
Patentamt

European
Patent Office

Office européen
des brevets

**Application Number**

EP 15 19 2167

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

**Application Number**

EP 15 19 2167

The Search Division considers that the present European patent application does not comply with the requirements of unity of invention and relates to several inventions or groups of inventions, namely:

1. claims: 4(completely); 1-3, 5-9, 12-15(partially)

   Use of fenpropimorph for the prevention and/or the treatment of phytopathogenic fungi in soybean plants, wherein fenpropimorph is used in combination with a DMI fungicide. Fungicidal composition for the prevention and/or treatment of Soybean Rust and/or powdery mildew comprising fenpropimorph, a DMI fungicide and a QoI fungicide, and optionally one or more auxiliary materials. A method for the treatment and/or the prevention of fungicidal infection in soybean plants, by applying the above fungicidal composition to the plants and/or the area soybean plants are grown.

   ---

2. claims: 1-3, 5-9, 12-15(all partially)

   Use of fenpropimorph for the prevention and/or the treatment of phytopathogenic fungi in soybean plants, wherein fenpropimorph is used in combination with a QoI fungicide Fungicidal composition for the prevention and/or treatment of Soybean Rust and/or powdery mildew comprising fenpropimorph, a DMI fungicide and a QoI fungicide; or fenpropimorph, a QoI fungicide and a SDHI fungicide, and optionally one or more auxiliary materials. A method for the treatment and/or the prevention of fungicidal infection in soybean plants, by applying the above fungicidal composition to the plants and/or the area soybean plants are grown.

   ---

3. claims: 10, 11(completely); 1-3, 5-9, 15(partially)

   Use of fenpropimorph for the prevention and/or the treatment of phytopathogenic fungi in soybean plants, wherein fenpropimorph is used in combination with a contact fungicide. Fungicidal composition for the prevention and/or treatment of Soybean Rust and/or powdery mildew comprising fenpropimorph and a contact fungicide, and optionally one or more auxiliary materials. A method for the treatment and/or the prevention of fungicidal infection in soybean plants, by applying the above fungicidal composition to the plants and/or the area soybean plants are grown.

   ---

4. claims: 1-3, 5-9, 12-15(all partially)

   Use of fenpropimorph for the prevention and/or the treatment of phytopathogenic fungi in soybean plants, wherein

Europäisches
Patentamt

European
Patent Office

Office européen
des brevets

**LACK OF UNITY OF INVENTION**
**SHEET B**

Application Number

EP 15 19 2167

The Search Division considers that the present European patent application does not comply with the
requirements of unity of invention and relates to several inventions or groups of inventions, namely:

> fenpropimorph is used in combination with a SDHI fungicides,
> which are selected from benzovindiflupyr.
> Fungicidal composition for the prevention and/or treatment
> of Soybean Rust and/or powdery mildew comprising
> fenpropimorph and a a QoI fungicide and a SDHI fungicide,
> selected from benzovindiflupyr, and optionally one or more
> auxiliary materials.
> A method for the treatment and/or the prevention of
> fungicidal infection in soybean plants, by applying the
> above fungicidal composition to the plants and/or the area
> soybean plants are grown.
> ---

5. claims: 1-3, 5-9, 12-15(all partially)

> Use of fenpropimorph for the prevention and/or the treatment
> of phytopathogenic fungi in soybean plants, wherein
> fenpropimorph is used in combination with a SDHI fungicides,
> which are selected from fluxapyroxad.
> Fungicidal composition for the prevention and/or treatment
> of Soybean Rust and/or powdery mildew comprising
> fenpropimorph and a a QoI fungicide and a SDHI fungicide,
> selected from fluxapyroxad, and optionally one or more
> auxiliary materials.
> A method for the treatment and/or the prevention of
> fungicidal infection in soybean plants, by applying the
> above fungicidal composition to the plants and/or the area
> soybean plants are grown.
> ---

6. claims: 1-3, 5-8(all partially)

> Use of fenpropimorph for the prevention and/or the treatment
> of phytopathogenic fungi in soybean plants, wherein
> fenpropimorph is used in combination with the
> cyanoacetamide-oxime fungicide cymoxanil.
> ---

## ANNEX TO THE EUROPEAN SEARCH REPORT
## ON EUROPEAN PATENT APPLICATION NO.

EP 15 19 2167

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2016

| Patent document cited in search report | | Publication date | Patent family member(s) | | Publication date |
|---|---|---|---|---|---|
| WO 2012019981 | A1 | 16-02-2012 | TW | 201210488 A | 16-03-2012 |
| | | | UY | 33550 A | 29-02-2012 |
| | | | WO | 2012019981 A1 | 16-02-2012 |
| WO 2011110583 | A2 | 15-09-2011 | NONE | | |
| WO 2011095134 | A1 | 11-08-2011 | BR | PI1000361 A2 | 27-09-2011 |
| | | | CL | 2012002149 A1 | 05-11-2012 |
| | | | CN | 102781234 A | 14-11-2012 |
| | | | CO | 6592071 A2 | 02-01-2013 |
| | | | EC | SP12012079 A | 28-12-2012 |
| | | | EP | 2531025 A1 | 12-12-2012 |
| | | | EP | 2891402 A1 | 08-07-2015 |
| | | | GT | 201200233 A | 24-09-2014 |
| | | | MA | 34020 B1 | 01-02-2013 |
| | | | UA | 110105 C2 | 25-11-2015 |
| | | | US | 2012302559 A1 | 29-11-2012 |
| | | | WO | 2011095134 A1 | 11-08-2011 |
| CN 101911940 | A | 15-12-2010 | NONE | | |
| WO 2015079334 | A1 | 04-06-2015 | BR | 102014029476 A2 | 14-07-2015 |
| | | | UY | 35847 A | 29-05-2015 |
| | | | WO | 2015079334 A1 | 04-06-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007048534 A1
- WO 2008049575 A2
- WO 2006131230 A2

### Non-patent literature cited in the description

- **GODOY, C. V. ; KOGA, L. J. ; CANTERI, M. G.** Diagrammatic scale for assessment of soybean rust severity. *Fitopatol. Bras.,* 2006, vol. 31 (1), 63-68
- **ABBOTT, W. S.** A method of computing the effectiveness of an insecticides. *Journal of Economic Entomology,* 1925, vol. 18, 265-267
- **COLBY, S.R.** Calculating synergistic and antagonistic responses of herbicide combinations. *Weeds,* 1967, vol. 15, 20-22